# EUROPEAN PATENT APPLICATION

(11) **EP 3 087 845 A1**
(43) Date of publication of application: **02.11.2016**
(21) Application number: 14874778.5
(22) Date of filing: 26.12.2014
(51) Int. Cl.: A23F 5/36

(54) **SOLUBLE COFFEE**

(30) Priority: 27.12.2013 JP 2013272325
(71) Applicant: Kao Corporation, Chuo-ku Tokyo 103-8210 (JP)
(72) Inventor: OZATO, Naoki, Tokyo 131-8501 (JP); KUSAURA, Tatsuya, Tokyo 131-8501 (JP)
(74) Representative: Hoffmann Eitle
(86) International application number: PCT/JP2014/084477
(87) International publication number: WO 2015/099110

(57) **Abstract**

Provided is a soluble coffee, including: a dried coffee extract; and a roasted coffee bean fine powder, in which the soluble coffee has amass ratio of acetic acid (B) tomalic acid (A), [(B) / (A)], of 2.9 or less.

## Description

### Field of the Invention

The present invention relates to a soluble coffee.

### Background of the Invention

The taste and flavor of coffee include bitterness, sourness, richness, and the like, which are sensed on the tongue as a sense of taste, and an odor that is sensed as a sense of smell, and the odor includes orthonasal aroma, which is directly sensed by the nose, and retronasal aroma, which spreads from the throat to the nose when the coffee is held in the mouth. The taste and flavor of fresh coffee are significantly excellent, whereas an operation to make coffee and disposal of waste are inconvenient. In order to eliminate the inconvenience, a soluble coffee that can be immediately drunk by dissolving the coffee in hot water or cold water has been developed and widely used. However, the soluble coffee is liable to deteriorate in taste and aroma peculiar to coffee during production.

Accordingly, many attempts have been made to enhance the taste and aroma peculiar to coffee of a soluble coffee. For example, there have been proposed a soluble coffee containing a dry coffee extract component obtained by drying a coffee extract, and a finely pulverized coffee bean component that has not been extracted (Patent Document 1), and a coffee composition including an instant freeze-dried coffee and finely pulverized coffee beans subjected to regular roasting (Patent Document 2).

### Citation List

### Patent Document

[Patent Document 1] JP-A-2011-527574
[Patent Document 2] JP-A-2013-506415

### Summary of the Invention

The present invention is as described below.
(1) A soluble coffee, comprising:
   a dried coffee extract; and
   a roasted coffee bean fine powder,
   wherein the soluble coffee has a mass ratio of acetic acid (B) to malic acid (A), [(B)/(A)], of 2.9 or less.
(2) A method of improving sourness of a soluble coffee, the method comprising blending a dried coffee extract and a roasted coffee bean fine powder so that a mass ratio of acetic acid (B) to malic acid (A), [(B)/(A)], is adjusted to 2.9 or less.

### Embodiment for Carrying out the Invention

It was found that the related-art soluble coffee, which was produced by adding finely pulverized coffee beans to a dried coffee extract, had a problem in that the soluble coffee was insufficient in sourness while having an enhanced aroma peculiar to coffee. In addition, external appearance is also an important factor for promotion of a good taste of coffee, but many of the related-art soluble coffees may have a lower transparency when dissolved in hot water or cold water.

The present invention relates to a soluble coffee having good quality of sourness and a good aroma spreading to the nose.

The inventors of the present invention made extensive investigations on sourness of coffee, and as a result, found that the sourness of coffee included favorable sourness and unpleasant sourness, which were derived from specific organic acids, and the quality of the sourness of coffee deteriorated when the content ratio of the organic acid imparting unpleasant sourness was increased. Then, the inventors found that a soluble coffee having good quality of sourness and a good aroma spreading to the nose was able to be obtained by incorporating a dried coffee extract and a roasted coffee bean fine powder so that the quantitative ratio between the specific organic acids was controlled to fall within a certain range.

According to the present invention, the soluble coffee having good quality of sourness and a good aroma spreading to the nose can be provided.

The soluble coffee of the present invention is described below.

The term "soluble coffee" as used herein refers to an instant product that can be drunk immediately after reconstituting the product with a liquid such as water or milk, at the time of drinking, and solids in the soluble coffee is typically 95 mass% or more, preferably 97 mass% or more. The upper limit of the solids is not particularly limited and may be 100 mass%. The term "solids" as used herein refers to a mass of a residue obtained by drying a sample in an electric thermostat dryer at 105 °C for 3 hours to remove volatile substances.

The soluble coffee of the present invention comprises a dried coffee extract.

The term "dried coffee extract" as used herein refers to a product obtained by drying a coffee extract. The solids in the dried coffee extract is typically 95 mass% or more, preferably 97 mass% or more, and the upper limit thereof is not particularly limited and may be 100 mass%.

Examples of the coffee extract include a coffee extract obtained by extraction of roasted coffee beans and an aqueous solution of instant coffee, and the extract or aqueous solution is preferably subjected to treatment with activated carbon before use from the viewpoint of improving quality of sourness.

The coffee extract is obtained by using, in terms of raw beans, preferably 1 g or more, more preferably 2.5 g or more, even more preferably 5 g or more of roasted coffee beans per 100 g of the coffee extract. Herein, the value in terms of raw beans is defined as follows: 1 g of roasted coffee beans correspond to 1.3 g of raw coffee beans (Soft Drinks (newly revised), edited by Japan Soft Drink Association, published by Korin Publishing Co., Ltd., published on December 25, 1989, described in p. 421).

An extraction method and extraction conditions are not particularly limited, and may be a known method and conditions, and amultistepextractionmethodmay be adopted. The term "multistep extraction method" as used herein refers to an extraction method involving: loading one or more roasted coffee beans into a plurality of independent extraction towers; feeding a solvent for extraction to the first extraction tower to discharge a coffee extract from the extraction tower; feeding the coffee extract discharged from the first extraction tower to the second extraction tower to discharge a coffee extract from the extraction tower; repeating the foregoing procedure; and collecting a coffee extract discharged from the final extraction tower. The extraction may be carried out under normal pressure or under elevated pressure.

The roasted coffee beans to be used for the extraction have a degree of roasting which is represented by an L value, of preferably from 10 to 60, more preferably from 13 to 40, more preferably from 15 to 35, even more preferably from 20 to 32. In the present invention, a mixture of coffee beans having different degrees of roasting may be used. In the case of using a mixture of coffee beans having different degrees of roasting, the roasted coffee beans have a degree of roasting calculated as a sum of values each determined by multiplying an L value of roasted coffee beans to be used by a content mass ratio of the roasted coffee beans. The term "L value" as used herein refers to a value as determined by measuring the lightness of roasted coffee beans with a colorimeter under the assumption that black has an L value of 0 and white has an L value of 100. A roasting method and roasting conditions are not particularly limited.

For example, *Coffea arabica, Coffea robusta,* and *Coffea liberica* are given as a bean species of the coffee beans, and for example, Brazil, Colombia, Guatemala, Indonesia, Vietnam, Tanzania, Yemen, Ethiopia, and Jamaica are given as producing regions of the coffee beans. In the present invention, one roasted coffee bean or a mixture of two or more of roasted coffee beans different in bean species and producing region may be used.

The treatment with activated carbon may be carried out in a batchmanner or in a continuous manner. In addition, preparation of the coffee extract maybe carried out approximately simultaneously with the treatment with activated carbon by loading roasted coffee beans and activated carbon into the single container and feeding a solvent for extraction to the container. The batch treatment may be carried out by, for example, adding activated carbon to a coffee extract, stirring the mixture at from 0 to 100°C for from 0.5 minute to 5 hours, and removing the activated carbon. The continuous treatment may be carried out by, for example, filling a column with activated carbon, passing a coffee extract through the column from the lower portion or the upper portion of the column, and discharging the extract from the opposite side.

The activated carbon is not particularly limited as long as the activated carbon is generally industrially applicable, and examples thereof may include powdery activated carbon, granular activated carbon, and activated carbon fiber. Examples of a raw material of the activated carbon include sawdust, coal, and palm shell, and of those, palm shell is preferred. In addition, activated carbon having been activated by a gas, such as water vapor, is preferably used. Commercially available products of activated carbon activated by water vapor may be, for example, Shirasagi WH2c (Japan EnviroChemicals Ltd.), Taiko CW (Futamura Chemical Co., Ltd.), and Kuraray Coal GL (Kuraray Chemical Co., Ltd.).

The usage of the activated carbon with respect to the Brix (%) of a coffee extract is preferably from 2 to 50 mass%, more preferably from 5 to 45 mass%, even more preferably from 10 to 40 mass%, from the viewpoint of improving quality of sourness. The term "Brix" as used herein refers to a value as determined using a sugar refractometer and corresponds to a ratio by mass of an aqueous solution of sucrose at 20°C. In addition, the Brix means a concentration of soluble solids, calculated from a refractive index of a sample based on a refractive index of an aqueous solution of sucrose at 20°C. Specifically, the Brix may be measured by a method described in Examples below. In addition, the temperature at which a sample is brought into contact with the activated carbon is typically from 0 to 100°C, preferably from 10 to 80°C, more preferably from 12 to 60°C.

For example, spray drying, vacuum drying, and freeze drying are given as a method of drying the coffee extract. The dried coffee extract may be in a form such as a powder form or a granule form.

In addition, the soluble coffee of the present invention comprises a roasted coffee bean fine powder. The term "roasted coffee bean fine powder" as used herein refers to fine particles of roasted coffee beans. An average particle size of the roasted coffee bean fine powder is preferably 550 µm or less, more preferably 500 µm or less, more preferably 400 µm or less, more preferably 300 µm or less, more preferably 230 µm or less, more preferably 120 µm or less, more preferably 100 µm or less, more preferably 80 µm or less, more preferably 50 µm or less, even more preferably 30 µm or less, and is preferably 10 µm or more, more preferably 12 µm or more, even more preferably 15 µm or more, from the viewpoints of enhancing an aroma spreading to the nose and a clean taste, reducing a residual feeling on the tongue, and improving transparency. Such average particle size falls within the range of preferably from 10 to 550 µm, more preferably from 10 to 500 µm, more preferably from 10 to 400 µm, more preferably from 10 to 300 µm, more preferably from 12 to 230 µm, more preferably from 12 to 120 µm, more preferably from 12 to 100 µm, more preferably from 15 to 80 µm, more preferably from 15 to 50 µm, even more preferably from 15 to 30 µm. The term "average particle size of a roasted coffee bean fine powder" as used herein refers to a value as determined by a laser diffraction/scattering method based on Mie scattering theory. Specifically, the average particle size is a median diameter (d₅₀) determined by measuring a particle size distribution on a volume basis of a roasted coffee bean fine powder using a particle size distribution measuring device based on a laser diffraction/scattering method.

The roasted coffee bean fine powder may be obtained by pulverizing or polishing roasted coffee beans. A device to be used for the pulverization or the polishing may be, for example, a mill or a grinder. The pulverization or polishing of the roasted coffee beans may be carried out at normal temperature (20±15°C) , and from the viewpoint of further enhancing an aroma spreading to the nose, the roasted coffee beans may be cooled to -5°C or less before the pulverization or polishing. The cooling of the roasted coffee beans may be carried out by bringing the roasted coffee beans into contact with liquid nitrogen or dry ice or the like.

To prepare a roasted coffee bean fine powder having a desired average particle size, after the pulverization or polishing of the roasted coffee beans, the roasted coffee beans may be sieved to collect a roasted coffee bean fine powder having a desired average particle size. The classification may be carried out using, for example, a sieve manufactured by Tyler (JIS Z 8801-1).

The degree of roasting of the roasted coffee beans to be used in the roasted coffee bean fine powder is represented by the L value, and is preferably 10 or more, more preferably 13 or more, more preferably 15 or more, even more preferably 16 or more, from the viewpoint of enhancing an aroma spreading to the nose, and is preferably 40 or less, more preferably 35 or less, more preferably 30 or less, more preferably 26 or less, even more preferably 22 or less. Such L value falls within the range of preferably from 10 to 40, more preferably from 13 to 35, more preferably from 13 to 30, more preferably from 15 to 26, even more preferably from 16 to 22. A roasting method and roasting conditions are not particularly limited.

Examples of the bean species and producing region of coffee beans include those as described above, and one or two or more of roasted coffee beans different in bean species, producing region, and degree of roasting may be used.

The soluble coffee of the present invention typically further comprises cellulose (C). The cellulose (C) is mainly derived from a roasted coffee bean fine powder, and a content of the cellulose (C) may serve as an indicator of the content of the roasted coffee bean fine powder.

The content of the cellulose (C) in the soluble coffee of the present invention is preferably 0.001 mass% or more, more preferably 0.005 mass% or more, more preferably 0.01 mass% or more, more preferably 0.03 mass% or more, more preferably 0.04 mass% or more, even more preferably 0.05 mass% or more, from the viewpoint of further enhancing an aroma spreading to the nose, and is preferably 0.30 mass% or less, more preferably 0.27 mass% or less, more preferably 0.21 mass% or less, more preferably 0.16 mass% or less, even more preferably 0.14 mass% or less, from the viewpoints of enhancing a clean taste, reducing a residual feeling on the tongue, and improving transparency. The content of the cellulose (C) in the soluble coffee of the present invention falls within the range of preferably from 0.001 to 0.30 mass%, more preferably from 0.005 to 0.30 mass%, more preferably from 0.01 to 0.27 mass%, more preferably from 0.03 to 0.21 mass%, more preferably from 0.04 to 0.16 mass%, even more preferably from 0.05 to 0.14 mass%.

The soluble coffee of the present invention comprises malic acid (A) and acetic acid (B) at a specific ratio.

The malic acid (A) may be a single optically active substance or a mixture of optical isomers, and may be derived from a raw material or may be newly added.

The soluble coffee of the present invention comprises the acetic acid (B) at a low content as compared to a typical one, and amass ratio of the acetic acid (B) to the malic acid (A), [(B)/(A)] , is 2.9 or less. It is preferably 2.8 or less, more preferably 2.7 or less, even more preferably 2.6 or less, from the viewpoint of further improving quality of sourness. The lower limit of the mass ratio [(A)/(B)] is not particularly limited, and is preferably 1. 4 or more, more preferably 1.7 or more, more preferably 2.0 or more, even more preferably 2.1 or more, from the viewpoint of enhancing an aroma spreading to the nose. The mass ratio [(A) / (B)] falls with a range of preferably from 1.4 to 2.8, more preferably from 1.7 to 2.7, more preferably from 2.0 to 2.7, even more preferably from 2.1 to 2.6.

A content of the malic acid (A) in the soluble coffee of the present invention is preferably 0.45 mass% or more, more preferably 0.48 mass% or more, even more preferably 0.50 mass% or more, from the viewpoint of quality of sourness. The upper limit of the content of the malic acid (A) is not particularly limited, and is preferably 0.9 mass% or less, more preferably 0.8 mass% or less, even more preferably 0.7 mass% or less, from the viewpoint of strength of sourness. The content of the malic acid (A) in the soluble coffee of the present invention falls within the range of preferably from 0.45 to 0.9 mass%, more preferably from 0.48 to 0.8 mass%, even more preferably from 0. 50 to 0. 70 mass%. The content of malic acid is a total content of D-malic acid and L-malic acid.

A content of the acetic acid (B) in the soluble coffee of the present invention is preferably 1.4 mass% or less, more preferably 1.35 mass% or less, even more preferably 1.3 mass% or less, from the viewpoint of quality of sourness. The lower limit of the content of the acetic acid (B) is not particularly limited, and is preferably 0.001 mass% or more, more preferably 0.10 mass% or more, even more preferably 0. 20 mass% or more, from the viewpoint of production. The content of the acetic acid (B) in the soluble coffee of the present invention falls within the range of preferably from 0.001 to 1.4 mass%, more preferably from 0.10 to 1.35 mass%, even more preferably from 0.20 to 1.3 mass%.

Further, in a particle size distribution on a volume basis, as determined for a diluted solution obtained by diluting 2 g of the soluble coffee of the present invention with 180 mL of pure water at 85°C using a laser diffraction particle size analyzer, the ratio of particles each having a particle size of 10 µm or more is preferably 95 vol% or more, more preferably 96 vol% or more, more preferably 97 vol% or more, even more preferably 98 vol% or more, from the viewpoint of enhancing an aroma spreading to the nose and a clean taste, and is preferably 99.8 vol% or less, more preferably 99.5 vol% or less, even more preferably 99.2 vol% or less, from the viewpoint of improving transparency. The ratio of particles each having a particle size of 10 µm or more falls within the range of preferably from 95 to 99.8 vol%, more preferably from 96 to 99.5 vol%, more preferably from 97 to 99.5 vol%, even more preferably from 98 to 99.2 vol%.

The soluble coffee of the present inventionmay comprise a chlorogenic acid (D). The term "chlorogenic acid" as used herein is a general term collectively encompassing: monocaffeoylquinic acids including 3-caffeoylquinic acid, 4-caffeoylquinic acid, and 5-caffeoylquinic acid; monoferuloylquinic acids including 3-feruloylquinicacid, 4-feruloylquinic acid, and5-feruloylquinic acid; and dicaffeoylquinic acids including 3,4-dicaffeoylquinic acid, 3,5-dicaffeoylquinic acid, and 4,5-dicaffeoylquinic acid, and in the present invention, the soluble coffee may comprise at least one of the nine chlorogenic acids described above.

A content of the chlorogenic acid (D) in the soluble coffee of the present invention is preferably 5 mass% or more, more preferably 5.5 mass% or more, even more preferably 6 mass% or more, from the viewpoint of physiological effects, and is preferably 20 mass% or less, more preferably 17 mass% or less, more preferably 15 mass% or less, more preferably 14 mass% or less, even more preferably 13 mass% or less, from the viewpoint of taste and flavor. The content of the chlorogenic acid (D) in the soluble coffee of the present invention falls within the range of preferably from 5 to 20 mass%, more preferably from 5 to 17 mass%, more preferably from 5 to 15 mass%, more preferably from 5.5 to 14 mass%, even more preferably from 6 to 13 mass%. The content of the chlorogenic acid is defined based on the total amount of the nine chlorogenic acids described above.

A mass ratio of the malic acid (A) to the chlorogenic acid (D), [(A)/(D)], in the soluble coffee of the present invention is preferably 0.05 or more, more preferably 0.055 or more, even more preferably 0.06 or more, from the viewpoint of improving quality of sourness, and is preferably 0.20 or less, more preferably 0.10 or less, even more preferably 0.08 or less, from the viewpoint of strength of sourness. The mass ratio [(A)/(D)] falls within the range of preferably from 0.05 to 0.20, more preferably from 0.055 to 0.10, even more preferably from 0.06 to 0.08.

The mass ratio of the acetic acid (B) to the chlorogenic acid (D), [(B)/(D)], in the soluble coffee of the present invention is preferably 0.25 or less, more preferably 0.2 or less, more preferably 0.18 or less, even more preferably 0.17 or less, from the viewpoint of strength of sourness, and is preferably 0.01 or more, more preferably 0.02 or more, more preferably 0.04 or more, even more preferably 0.06 or more, from the viewpoints of imparting a clean taste and reducing a residual feeling on the tongue. The mass ratio [(B)/(D)] falls within the range of preferably from 0.01 to 0.25, more preferably from 0.01 to 0.2, more preferably from 0.04 to 0.18, even more preferably from 0.06 to 0.17.

The soluble coffee of the present invention may further comprise caffeine (E).

A content of the caffeine (E) in the soluble coffee of the present invention is preferably 5 mass% or less, more preferably 4 mass% or less, more preferably 3 mass% or less, even more preferably 2.5 mass% or less, from the viewpoints of enhancing an aroma spreading to the nose and improving quality of sourness. In addition, the content of the caffeine (E) is preferably 0.01 mass% or more, more preferably 0.1 mass% or more, more preferably 0.5 mass% or more, even more preferably 1 mass% or more, from the viewpoint of imparting adequate bitterness. The content of the caffeine (E) in the soluble coffee falls within the range of preferably from 0.01 to 5 mass%, more preferably from 0.1 to 4 mass%, more preferably from 0.5 to 3 mass%, even more preferably from 1 to 2.5 mass%.

Amass ratio of the caffeine (E) to the chlorogenic acid (D), [(E)/(D)], in the soluble coffee of the present invention is preferably 0.48 or less, more preferably 0.4 or less, even more preferably 0.35 or less, from the viewpoints of enhancing aroma spreading to the nose and improving quality of sourness. In addition, the mass ratio [(E) / (D)] is preferably 0. 001 or more, more preferably 0.01 or more, even more preferably 0.1 or more, from the viewpoint of imparting adequate bitterness. The content of the caffeine (E) in the soluble coffee falls within the range of preferably from 0.001 to 0.48, more preferably from 0.01 to 0.4, even more preferably from 0.1 to 0.35.

Further, the HAZE value of a diluted solution obtained by diluting 3.4 g of the soluble coffee of the present invention with 180 mL of pure water at 85°C is preferably 85 or less, more preferably 80 or less, more preferably 75 or less, evenmore preferably 70 or less, from the viewpoint of transparency. The lower limit of the HAZE value is not particularly limited. The term "HAZE value" as used herein refers to an indicator of transparency, and the value is determined from the ratio of scattered transmitted light to total transmitted light, and specifically, may be measured by a method described in Examples below.

The soluble coffee of the present invention may be produced by, for example, blending a dried coffee extract and a roasted coffee bean fine powder so that the mass ratio [(B)/(A)] is adjusted to fall within a predetermined range.

The soluble coffee of the present invention may be produced by mixing a previously-dried coffee extract and a roasted coffee bean fine powder or by mixing a liquid coffee extract with a roasted coffee bean fine powder and drying the resulting mixture. From the viewpoint of enhancing aroma spreading to the nose, the soluble coffee is preferably produced by mixing a previously-dried coffee extract and a roasted coffee bean fine powder.

A ratio of the roasted coffee bean fine powder to the dried coffee extract is preferably 150 mass% or less, more preferably 60 mass% or less, more preferably 50 mass% or less, more preferably 40 mass% or less, more preferably 30 mass% or less, more preferably 25 mass% or less, even more preferably 20 mass% or less, from the viewpoints of enhancing a clean taste, reducing a residual feeling on the tongue, and improving transparency, and is preferably 0.5 mass% or more, more preferably 1 mass% or more, more preferably 1.5 mass% or more, more preferably 2 mass% or more, more preferably 3 mass% or more, more preferably 4 mass% or more, even more preferably 5 mass% or more, from the viewpoint of further enhancing an aroma spreading to the nose. The ratio of the roasted coffee bean fine powder to the dried coffee extract falls within the range of preferably from 0.5 to 150 mass%, more preferably from 1 to 60 mass%, more preferably from 1.5 to 50 mass%, more preferably from 2 to 40 mass%, more preferably from 3 to 30 mass%, more preferably from 4 to 25 mass%, even more preferably from 5 to 20 mass%.

In addition, as required, the soluble coffee of the present invention may comprise one or two or more of additives, such as a sweetener, a milk component, cocoa powder, an antioxidant, a flavor, a dye, an emulsifier, a preservative, a seasoning, an acidulant, an amino acid, a protein, a vegetable fat or oil, a pH regulator, and a quality stabilizer.

The soluble coffee of the present invention may have various forms, and examples thereof may include a product that is filled in a container such as a bottle, and weighed in an amount of a cup of coffee with a spoon or the like before drinking, a cup-type product including coffee in an amount of a cup of coffee, and a stick-type product containing one-cup dose.

A method of improving sourness of the soluble coffee of the present invention may comprise, for example, blending a dried coffee extract and a roasted coffee bean fine powder so that the mass ratio [(B)/(A)] falls within a predetermined range. The method of improving sourness of the soluble coffee of the present invention may have the same construction as that of the foregoing soluble coffee.

With regard to the above-mentioned embodiments, the present invention also discloses the following soluble coffee and methods.
<1> A soluble coffee, comprising:
   a dried coffee extract; and
   a roasted coffee bean fine powder,
   wherein the soluble coffee has a mass ratio of acetic acid (B) to malic acid (A), [(B)/(A)], of 2.9 or less.
<2> A method of improving sourness of a soluble coffee, the method comprising blending a dried coffee extract and a roasted coffee bean fine powder so that a mass ratio of acetic acid (B) to malic acid (A), [(B)/(A)], is adjusted to 2.9 or less.
<3> The soluble coffee according to the above-mentioned item <1> or the method of improving sourness of a soluble coffee according to the above-mentioned item <2>, wherein in a particle size distribution on a volume basis measured for a diluted solution obtained by diluting 2 g of the soluble coffee with 180 mL of pure water at 85°C by a laser diffraction particle size analyzer, the ratio of particles having a particle size of 10 µm or more is 95 vol% or more.
<4> The soluble coffee according to the above-mentioned item <1> or <3>, further comprising 0.001 mass% or more of cellulose (C).
<5> The method of improving sourness of a soluble coffee according to the above-mentioned item <2> or <3>, the method further comprising adjusting the content of cellulose (C) to 0.001 mass% or more.
<6> The soluble coffee according to the above-mentioned item <1>, <3>, or <4>, or the method of improving sourness of a soluble coffee according to the above-mentioned item <2>, <3>, or <5> ("the soluble coffee or the method of improving sourness of a soluble coffee" is hereinafter referred to as "soluble coffee or the like"), wherein the solids in the soluble coffee is preferably 95 mass% or more, more preferably 97 mass% or more.
<7> The soluble coffee or the like according to any one of the above-mentioned items <1> to <6>, wherein the dried coffee extract is preferably a product obtained by drying a coffee extract.
<8> The soluble coffee or the like according to the above-mentioned item <7>, wherein the coffee extract is preferably a coffee extract obtained by extraction of roasted coffee beans or an aqueous solution of an instant coffee, more preferably a product obtained by subj ecting a coffee extract obtained by extraction of roasted coffee beans or an aqueous solution of an instant coffee to treatment with activated carbon.
<9> The soluble coffee or the like according to the above-mentioned item <7> or <8>, wherein the coffee extract is obtained by using, in terms of raw beans, preferably 1 g or more, more preferably 2.5 g or more, even more preferably 5 g or more of roasted coffee beans per 100 g of the coffee extract.
<10> The soluble coffee or the like according to any one of the above-mentioned items <7> to <9>, wherein the coffee extract is preferably a product obtained by extraction of roasted coffee beans by a multistep extraction method.
<11> The soluble coffee or the like according to any one of the above-mentioned items <7> to <10>, wherein the L value of the roasted coffee beans to be used for extraction is preferably from 10 to 60, more preferably from 13 to 40, more preferably from 15 to 35, even more preferably from 20 to 32.
<12> The soluble coffee or the like according to any one of the above-mentioned items <7> to <11>, wherein the bean species of the roasted coffee beans to be used in extraction is preferably one or two or more selected from the group consisting of *Coffea arabica, Coffea robusta,* and *Coffea liberica,* and the producing region of the coffee beans is preferably one or two or more selected from the group consisting of Brazil, Colombia, Guatemala, Indonesia, Vietnam, Tanzania, Yemen, Ethiopia, and Jamaica.
<13> The soluble coffee or the like according to any one of the above-mentioned items <8> to <12>, wherein the activated carbon is preferably powdery activated carbon, granular activated carbon, or activated carbon fiber, more preferably palm shell-derived activated carbon, even more preferably palm shell-derived activated carbon activated by water vapor.
<14> The soluble coffee or the like according to any one of the above-mentioned items <8> to <13>, wherein the usage of the activated carbon is preferably from 2 to 50 mass%, more preferably from 5 to 45 mass%, even more preferably from 10 to 40 mass%, with respect to the Brix of the coffee extract.
<15> The soluble coffee or the like according to any one of the above-mentioned items <1> to <14>, wherein the solids in the dried coffee extract is preferably 95 mass% or more, more preferably 97 mass% or more.
<16> The soluble coffee or the like according to any one of the above-mentioned items <1> to <15>, wherein an average particle size of the roasted coffee bean fine powder is preferably 550 µm or less, more preferably 500 µm or less, more preferably 400 µm or less, more preferably 300 µm or less, more preferably 230 µm or less, more preferably 120 µm or less, more preferably 100 µm or less, more preferably 80 µm or less, more preferably 50 µm or less, even more preferably 30 µm or less, and is preferably 10 µm or more, more preferably 12 µm or more, even preferably 15 µm or more.
<17> The soluble coffee or the like according to any one of the above-mentioned items <1> to <16>, wherein the average particle size of the roasted coffee bean fine powder is preferably from 10 to 550 µm, more preferably from 10 to 500 µm, more preferably from 10 to 400 µm, more preferably from 10 to 300 µm, more preferably from 12 to 230 µm, more preferably from 12 to 120 µm, more preferably from 12 to 100 µm, more preferably from 15 to 80 µm, more preferably from 13 to 50 µm, even more preferably from 15 to 30 µm.
<18> The soluble coffee or the like according to any one of the above-mentioned items <1> to <17>, wherein the roasted coffee bean fine powder is preferably a product obtained by pulverizing or polishing roasted coffee beans.
<19> The soluble coffee or the like according to any one of the above-mentioned items <1> to <18>, wherein the roasted coffee bean fine powder is a fine powder of roasted coffee beans having an L value of preferably 10 or more, more preferably 13 or more, more preferably 15 or more, even more preferably 16 or more, and of preferably 40 or less, more preferably 35 or less, more preferably 30 or less, more preferably 26 or less, even more preferably 22 or less.
<20> The soluble coffee or the like according to any one of the above-mentioned items <1> to <19>, wherein the roasted coffee bean fine powder is a fine powder of roasted coffee beans having an L value of preferably from 10 to 40, more preferably from 13 to 35, more preferably from 13 to 30, more preferably from 15 to 26, even more preferably from 16 to 22.
<21> The soluble coffee or the like according to any one of the above-mentioned items <1> to <20>, wherein the bean species of coffee beans of the roasted coffee bean fine powder is preferably one or two or more selected from the group consisting of *Coffea arabica, Coffea robusta,* and *Coffea liberica,* and the producing region of the coffee beans is preferably one or two or more selected from the group consisting of Brazil, Colombia, Guatemala, Indonesia, Vietnam, Tanzania, Yemen, Ethiopia, and Jamaica.
<22> The soluble coffee or the like according to any one of the above-mentioned items <1> to <21>, wherein the mass ratio [(B)/(A)] is preferably 2.8 or less, more preferably 2.7 or less, even more preferably 2.6 or less, and is preferably 1. 4 or more, more preferably 1.7 or more, more preferably 2.0 or more, even more preferably 2.1 or more.
<23> The soluble coffee or the like according to any one of the above-mentioned items <1> to <22>, wherein the mass ratio [(B)/(A)] is preferably from 1.4 to 2.8, more preferably from 1.7 to 2.7, more preferably from 2.0 to 2.7, even more preferably from 2.1 to 2.6.
<24> The soluble coffee or the like according to any one of the above-mentioned items <1> to <23>, wherein the content of the malic acid (A) in the soluble coffee is preferably 0.45 mass% or more, more preferably 0.48 mass% or more, even more preferably 0. 50 mass% or more, and is preferably 0.9 mass% or less, more preferably 0.8 mass% or less, even more preferably 0.7 mass% or less.
<25> The soluble coffee or the like according to any one of the above-mentioned items <1> to <24>, wherein the content of the malic acid (A) in the soluble coffee is preferably from 0.45 to 0.9 mass%, more preferably from 0.48 to 0.8 mass%, even more preferably from 0.50 to 0.70 mass%.
<26> The soluble coffee or the like according to any one of the above-mentioned items <1> to <25>, wherein the content of the acetic acid (B) in the soluble coffee is preferably 1.4 mass% or less, more preferably 1.35 mass% or less, even more preferably 1.3 mass% % or less, and is preferably 0.001 mass% or more, more preferably 0.10 mass% or more, even more preferably 0.20 mass% or more.
<27> The soluble coffee or the like according to any one of the above-mentioned items <1> to <26>, wherein the content of the acetic acid (B) in the soluble coffee is preferably from 0.001 to 1.4 mass%, more preferably from 0.10 to 1.35 mass%, even more preferably from 0.20 to 1.3 mass%.
<28> The soluble coffee or the like according to any one of the above-mentioned items <4> to <27>, wherein the content of the cellulose (C) in the soluble coffee is preferably 0.001 mass% or more, more preferably 0.005 mass% or more, more preferably 0.01 mass% or more, more preferably 0.03 mass% or more, more preferably 0.04 mass% or more, even more preferably 0.05 mass% or more, and is preferably 0.30 mass% or less, more preferably 0.27 mass% or less, more preferably 0.21 mass% or less, more preferably 0.16 mass% or less, even more preferably 0.14 mass% or less.
<29> The soluble coffee or the like according to any one of the above-mentioned items <4> to <28>, wherein the content of the cellulose (C) in the soluble coffee is preferably from 0.001 to 0.30 mass%, more preferably from 0.005 to 0.30 mass%, more preferably from 0.01 to 0.27 mass%, more preferably from 0.03 to 0.21 mass%, more preferably from 0.04 to 0.16 mass%, even more preferably from 0.05 to 0.14 mass%.
<30> The soluble coffee or the like according to any one of the above-mentioned items <3> to <29>, wherein a ratio of particles each having a particle size of 10 µm or more is preferably 95 vol% or more, more preferably 96 vol% or more, more preferably 97 vol% or more, even more preferably 98 vol% or more, and is preferably 99.8 vol% or less, more preferably 99.5 vol% or less, even more preferably 99.2 vol% or less.
<31> The soluble coffee or the like according to any one of the above-mentioned items <3> to <30>, wherein the ratio of particles each having a particle size of 10 µm or more is preferably from 95 to 99.8 vol%, more preferably from 96 to 99.5 vol%, more preferably from 97 to 99.5 vol%, even more preferably from 98 to 99.2 vol%.
<32> The soluble coffee or the like according to any one of the above-mentioned items <1> to <31>, preferably further comprising a chlorogenic acid (D).
<33> The soluble coffee or the like according to the above-mentioned item <32>, wherein the chlorogenic acid is preferably one or two or more selected from the group consisting of 3-caffeoylquinic acid, 4-caffeoylquinic acid, 5-caffeoylquinic acid, 3-feruloylquinic acid, 4-feruloylquinic acid, 5-feruloylquinic acid, 3,4-dicaffeoylquinic acid, 3,5-dicaffeoylquinic acid, and 4,5-dicaffeoylquinic acid.
<34> The soluble coffee or the like according to the above-mentioned item <32> or <33>, wherein the content of the chlorogenic acid (D) in the soluble coffee is preferably 5 mass% or more, more preferably 5.5 mass% or more, even more preferably 6 mass% or more, and is preferably 20 mass% or less, more preferably 17 mass% or less, more preferably 15 mass% or less, more preferably 14 mass% or less, even more preferably 13 mass% or less.
<35> The soluble coffee or the like according to any one of the above-mentioned items <32> to <34>, wherein the content of the chlorogenic acid (D) in the soluble coffee is preferably from 5 to 20 mass%, more preferably from 5 to 17 mass%, more preferably from 5 to 15 mass%, more preferably from 5.5 to 14 mass%, even more preferably from 6 to 13 mass%.
<36> The soluble coffee or the like according to any one of the above-mentioned items <32> to <35>, wherein the mass ratio of the malic acid (A) to the chlorogenic acid (D), [(A)/(D)], in the soluble coffee is preferably 0.05 or more, more preferably 0.055 or more, even more preferably 0.06 or more, and is preferably 0.20 or less, more preferably 0.10 or less, even more preferably 0.08 or less.
<37> The soluble coffee or the like according to any one of the above-mentioned items <32> to <36>, wherein the mass ratio of the malic acid (A) to the chlorogenic acid (D), [(A)/(D)], in the soluble coffee is preferably from 0.05 to 0.20, more preferably from 0.055 to 0.10, even more preferably from 0.06 to 0.08.
<38> The soluble coffee or the like according to any one of the above-mentioned items <32> to <37>, wherein a mass ratio of the acetic acid (B) to the chlorogenic acid (D), [(B)/(D)], in the soluble coffee is preferably 0.25 or less, more preferably 0.2 or less, more preferably 0.18 or less, even more preferably 0.17 or less, and is preferably 0.01 or more, more preferably 0.02 or more, more preferably 0.04 or more, even more preferably 0.06 or more.
<39> The soluble coffee or the like according to any one of the above-mentioned items <32> to <38>, wherein the mass ratio of the acetic acid (B) to the chlorogenic acid (D), [(B)/(D)], in the soluble coffee is preferably from 0.01 to 0.25, more preferably from 0.02 to 0.2, more preferably from 0.04 to 0.18, even more preferably from 0.06 to 0.17.
<40> The soluble coffee or the like according to any one of the above-mentioned items <1> to <39>, preferably further comprising caffeine (E).
<41> The soluble coffee or the like according to the above-mentioned item <40>, wherein a content of the caffeine (E) in the soluble coffee is preferably 5 mass% or less, more preferably 4 mass% or less, more preferably 3 mass% or less, even more preferably 2.5 mass% or less, and is preferably 0.01 mass or more, more preferably 0.1 mass% or more, more preferably 0.5 mass% or more, even more preferably 1 mass% or more.
<42> The soluble coffee or the like according to the above-mentioned item <40> or <41>, wherein the content of the caffeine (E) in the soluble coffee is preferably from 0.01 to 5 mass%, more preferably from 0.1 to 4 mass%, more preferably from 0.5 to 3 mass%, even more preferably from 1 to 2.5 mass%, and may be 0 mass% or more.
<43> The soluble coffee or the like according to any one of the above-mentioned items <40> to <42>, wherein a mass ratio of the caffeine (E) to the chlorogenic acid (D), [(E)/(D)], in the soluble coffee is preferably 0.48 or less, more preferably 0.4 or less, even more preferably 0.35 or less, and is preferably 0.001 or more, more preferably 0.01 or more, even more preferably 0.1 or more.
<44> The soluble coffee or the like according to any one of the above-mentioned items <40> to <43>, wherein the mass ratio of the caffeine (E) to the chlorogenic acid (D), [(E)/(D)], in the soluble coffee is preferably from 0.001 to 0.48, more preferably from 0.01 to 0.4, even more preferably from 0.1 to 0.35.
<45> The soluble coffee or the like according to any one of the above-mentioned items <1> to <44>, wherein HAZE value of a diluted solution obtained by diluting 3.4g of the soluble coffee with 180 mL of pure water at 85°C is preferably 85 or less, more preferably 80 or less, more preferably 75 or less, even more preferably 70 or less.
<46> The soluble coffee or the like according to any one of the above-mentioned items <1> to <45>, wherein a ratio of the roasted coffee bean fine powder to the dried coffee extract is preferably 150 mass% or less, more preferably 60 mass% or less, more preferably 50 mass% or less, more preferably 40 mass% or less, more preferably 30 mass% or less, more preferably 25 mass% or less, even more preferably 20 mass% or less, and is preferably 0.5 mass% or more, more preferably 1 mass% or more, more preferably 1.5 mass% or more, more preferably 2 mass% or more, more preferably 3 mass% or more, more preferably 4 mass% or more, even more preferably 5 mass% or more.
<47> The soluble coffee or the like according to any one of the above-mentioned items <1> to <46>, wherein the ratio of the roasted coffee bean fine powder to the dried coffee extract is preferably from 0.5 to 150 mass%, more preferably from 1 to 60 mass%, more preferably from 1.5 to 50 mass%, more preferably from 2 to 40 mass%, more preferably from 3 to 30 mass%, more preferably from 4 to 25 mass%, even more preferably from 5 to 20 mass%.
<48> The soluble coffee or the like according to any one of the above-mentioned items <1> to <47>, preferably further comprising one or two or more of additives selected from the group consisting of a sweetener, a milk component, cocoa powder, an antioxidant, a flavor, a dye, an emulsifier, a preservative, a seasoning, an acidulant, an amino acid, a protein, a vegetable fat or oil, a pH regulator, and a quality stabilizer.
<49> The soluble coffee or the like according to any one of the above-mentioned items <1> to <48>, wherein the soluble coffee preferably has a form of a product that is filled in a container, such as a bottle, and weighed in an amount of a cup of coffee with a spoon or the like before drinking, a cup-type product including coffee in an amount of a cup of coffee, or a stick-type product containing one-cup dose.

### Examples

### (1) Analysis of Malic Acid and Acetic Acid

180 mL of pure water at 85°C was poured into 2 g of a soluble coffee, and the mixture was stirred and filtered to prepare a sample. The sample was appropriately diluted and subjected to measurement by capillary electrophoresis (CE).

### Measurement Condition: CE

- Used apparatus: Agilent Technologies CE system
- Capillary: fused silica
- Electrophoresis buffer: 2,6-pyridinedicarboxylic acid-based solution
- Applied potential difference: negative
- Detection: indirect absorptiometric method

### Standard Reagents

· Acetic acid: sodium acetate trihydrate (guaranteed reagent grade, manufactured by Kanto Chemical Co., Inc.)
· Malic acid: DL-malic acid (guaranteed reagent grade, manufactured by Kanto Chemical Co., Inc.)

### CE Conditions

- Applied voltage: -25 kV
- Apparatus model number: G1602A

### (2) Analysis of Cellulose

0.5 g to 10 g of a sample was collected in a 250 mL centrifuge tube, and 85 mL of an aqueous solution of 0.05% sodium chloride was added thereto. The mixture was subjected to thermal treatment in a boiled water bath for 30 minutes and then immediately cooled. After to the resulting cooled solution, 5 mL of a pancreatin solution was added, and the resultant was incubated under an environment of pH 6.5 and 40°C for 16 hours. The incubated solution was centrifuged, and the solid matter was collected using filter paper (ADVANTEC 101) . 50 mL of an aqueous solution of 5% sulfuric acid was added to the collected residue, and the resultant was left to stand for 2.5 hours in a boiled water bath to perform decomposition. After that, the solution was subjected to suction filtration using a glass filter (1G3), and the residue was washed with acetone and diethyl ether. 30 mL of 72% sulfuric acid was added to the washed solid matter, and the resultant was left to stand in a refrigerator at 5°C for 24 hours or more and subjected to suction filtration, followed by measurement of the amount of glucose in the filtrate by a phenol-sulfuric acid method to determine a quantity of cellulose.

### (3) Analysis of Chlorogenic Acids and Caffeine

180 mL of pure water at 85°C was poured into 2 g of a soluble coffee, and the mixture was stirred and dispensed into vials and subjected to an analysis.

HPLC was used as an analyzer. The model numbers of constituent units of the analyzer were as described below.
- UV-VIS detector: L-2420 (Hitachi High-Technologies Corporation)
- Column oven: L-2300 (Hitachi High-Technologies Corporation)
- Pump: L-2130 (Hitachi High-Technologies Corporation)
- Autosampler: L-2200 (Hitachi High-Technologies Corporation)
- Column: Cadenza CD-C18, 4.6 mm in inner diameter×150 mm in length, particle size: 3 µm (Imtakt Corporation)
- Detector

### Analysis conditions were as described below.

- Sample injection amount: 10 µL
- Flow rate: 1.0 mL/min
- Set wavelength of UV-VIS detector: 325 nm
- Set temperature of column oven: 35°C
- Eluent A: solution containing 0.05 M acetic acid, 0.1 mM 1-hydroxyethane-1,1-diphosphonic acid, 10 mM sodium acetate, and 5(V/V)% acetonitrile
- Eluent B: acetonitrile

**Concentration Gradient Condition**

| Time | Eluent A | Eluent B |
|---|---|---|
| 0.0 min | 100% | 0% |
| 10.0 min | 100% | 0% |
| 15.0 min | 95% | 5% |
| 20.0 min | 95% | 5% |
| 22.0 min | 92% | 8% |
| 50.0 min | 92% | 8% |
| 52.0 min | 10% | 90% |
| 60.0 min | 10% | 90% |
| 60.1 min | 100% | 0% |
| 70.0 min | 100% | 0% |

In HPLC, 1 g of a sample was weighed accurately, and after that, the sample was increased to 10 mL with the eluent A, filtered with a membrane filter (GL Chromatodisc 25A, pore diameter: 0.45 µm, GL Sciences Inc.), and then subjected to the analysis.

### Retention Times of Chlorogenic Acids

### Nine chlorogenic acids

- Monocaffeoylquinic acid: three peaks in total at 5.3 min, 8.8 min, and 11.6 min
- Monoferuloylquinic acid: three peaks in total at 13.0 min, 19.9 min, and 21.0 min
- Dicaffeoylquinic acid: three peaks in total at 36.6 6 min, 37.4 min, and 44.2 min

From area values for the nine chlorogenic acids determined in the foregoing, the content of the chlorogenic acids was determined in terms of % by mass by using 5-caffeoylquinic acid as a standard substance.

The analysis of caffeine was carried out in the same manner as in the cases of the chlorogenic acids except that caffeine was used as a reference material and the wavelength of the UV-VIS detector was set to 270 nm. The retention time of caffeine was 18.9 min.

### (4) Measurement of Particle Size Distribution of Soluble Coffee

180 mL of pure water at 85°C was poured into 2 g of a soluble coffee, and the mixture was stirred and cooled to 25°C. The particle size distribution of the sample was measured using a laser diffraction particle size analyzer (SALD-2100, manufactured by Shimadzu Corporation).

### (5) Measurement of Average Particle Size of Roasted Coffee Bean Fine Powder

180 mL of pure water at 85°C was poured into 1.0 g of a roasted coffee bean fine powder, and the mixture was stirred and cooled to 25°C. Subsequently, the particle size distribution of the sample was measured at 25°C using a laser diffraction particle size analyzer (SALD-2100, manufactured by Shimadzu Corporation), and an average particle size (d₅₀) was calculatedbased on the ratio of the respective volumes.

### (6) Measurement of HAZE

3.4 g of a soluble coffee was poured into 180 mL of pure water at 85°C, and the mixture was stirred and cooled to 25°C. Subsequently, the sample was placed in a glass cell (optical path length: 10 mm, width: 35 mm, height: 40 mm), and the HAZE value was measured at 25°C using HAZEMETER (HM-150, manufactured by Murakami Color Research Laboratory Co., Ltd.).

### (7) Measurement of L Value

The sample was subjected to measurement using a colorimeter (spectrophotometer SE2000, manufactured by Nippon Denshoku Industries Co., Ltd.).

### (8) Measurement of Brix

The Brix at 20°C of a sample was measured with a saccharimeter (Atago RX-5000, manufactured by Atago Co., Ltd.).

### (9) Sensory Evaluation

2 g of a soluble coffee was poured into 180 mL of pure water at 85°C, and the mixture was stirred to prepare a coffee beverage. After that, five expert panelists sampled each coffee beverage and evaluated its aroma spreading to the nose, quality of sourness, clean taste, and residual feeling on the tongue in accordance with the following criteria. After that, discussion was made to determine the final score.

### Evaluation Criteria of Aroma Spreading to Nose

- 5:: Strong
- 4:: Slightly strong
- 3:: Normal
- 2:: Slightly weak
- 1:: Weak

### Evaluation Criteria of Quality of Sourness

- 5:: Pleasant sourness
- 4:: Slightly pleasant sourness
- 3:: Neither
- 2:: Slightly unpleasant sourness
- 1:: Unpleasant sourness

### Evaluation Criteria of Clean Taste

- 5:: Strong
- 4:: Slightly strong
- 3:: Normal
- 2:: Slightly weak
- 1:: Weak

### Evaluation criteria of Residual Feeling on Tongue

- 5:: Completely insensible
- 4:: Insensible
- 3:: Slightly sensible
- 2:: Sensible
- 1:: Very sensible

### Example 1

Roasted coffee beans having an L value of 26 *(Coffea robusta,* produced in Vietnam) were pulverized and filled into six cylindrical extraction towers (160 mm in inner diameter×660 mm in height) so that the amount of the pulverized coffee beans filled per tower was 4.2 kg. Subsequently, hot water at 110°C was delivered from the lower portion of the first extraction tower to the upper portion. After that, the coffee extract solution discharged from the upper portion of the first extraction tower was delivered from the lower portion of the second extraction tower to the upper portion. The procedure was repeated in the third and subsequent extraction towers, and the coffee extract solution discharged from the upper portion of the sixth extraction tower was immediately cooled and collected. All of the extraction operations were carried out under an elevated pressure of 0.3 MPa. The resultant extract solution was concentrated by heating under reduced pressure using a rotary evaporator (model: N-1100V, manufactured by Tokyo Rikakikai Co., Ltd.) at 0.004 MPa and 50°C to yield a concentrated coffee composition having a Brix of 10%. Subsequently, 108 g of activated carbon (Shirasagi WH2C LSS, manufactured by Japan EnviroChemicals Ltd.) was added to a cylindrical column (72 mm in inner diameter×100 mm in height) and sterilized at 80°C for 10 minutes, and 3.6 kg of the concentrated coffee composition having a Brix of 10% was delivered at 25°C and a flow rate of 69. 1mL/min. Further, ion-exchange water was delivered at 25°C and a flow rate of 69.1 mL/min, and as a final collection amount, 4 kg of a solution treated with an activated carbon was obtained from the outlet of the column. The resultant treated solution was dried using a spray dryer to yield a dried coffee extract.

Roasted coffee beans having an L value of 16 (*Coffea arabica,* produced in Brazil) were pulverized at normal temperature using a Wonder Blender (model: WB-I, manufactured by Osaka Chemical Co., Ltd.), and the pulverized product was classified using sieves (Tyler 20, 60, 115, 170, and 400 mesh), followed by collection of particles having passed through the 400 mesh sieve to yield a roasted coffee bean fine powder having an average particle size adjusted to 19 µm.

10 mass% (0.34 g) of the roasted coffee bean fine powder was added with respect to 3.4 g of the dried coffee extract, and the resultant was mixed to yield a soluble coffee. The resultant soluble coffee was analyzed and subjected to a sensory evaluation. The results are shown in Table 1.

### Example 2

A soluble coffee was prepared in the same manner as in Example 1 except that 1.7 mg of D,L-malic acid was further added to 3.4 g of the dried coffee extract. The resultant soluble coffee was analyzed and subjected to the sensory evaluation. The results are shown in Table 1.

### Example 3

A soluble coffee was prepared in the same manner as in Example 1 except that 3.4 mg of D,L-malic acid was further added to 3.4 g of the dried coffee extract. The resultant soluble coffee was analyzed and subjected to the sensory evaluation. The results are shown in Table 1.

### Example 4

A soluble coffee was prepared in the same manner as in Example 1 except that 6.8 mg of D,L-malic acid was further added to 3.4 g of the dried coffee extract. The resultant soluble coffee was analyzed and subjected to the sensory evaluation. The results are shown in Table 1.

### Example 5

A soluble coffee was prepared in the same manner as in Example 1 except that 10.2 mg of D,L-malic acid was further added to 3.4 g of the dried coffee extract. The resultant soluble coffee was analyzed and subjected to the sensory evaluation. The results are shown in Table 1.

### Example 23

A soluble coffee was prepared in the same manner as in Example 1 except that the usage of the activated carbon with respect to 3.6 kg of the concentrated coffee composition having a Brix of 10% was changed to 54 g. The resultant soluble coffee was analyzed and subjected to the sensory evaluation. The results are shown in Table 1.

### Example 24

A soluble coffee was prepared in the same manner as in Example 1 except that the usage of the activated carbon with respect to 3.6 kg of the concentrated coffee composition having a Brix of 10% was changed to 126g. The resultant soluble coffee was analyzed and subjected to the sensory evaluation. The results are shown in Table 1.

### Example 25

A soluble coffee was prepared in the same manner as in Example 1 except that roasted coffee beans having an L value of 30 (*Coffea robusta,* produced in Vietnam) was used instead of the roasted coffee beans having an L value of 26 and the usage of the activated carbon with respect to 3. 6 kg of the concentrated coffee composition having a Brix of 10% was changed to 72 g. The resultant soluble coffee was analyzed and subjected to the sensory evaluation. The results are shown in Table 1.

### Comparative Example 1

The concentrated coffee composition of Example 1 was dried using a spray dryer without the treatment with the activated carbon to yield a dried coffee extract. The resultant dried coffee extract was analyzed and subjected to the sensory evaluation. The results are shown in Table 1.

### Comparative Example 2

A solution treated with an activated carbon was obtained in the same manner as in Example 1, and then dried using a spray dryer to yield a soluble coffee. The resultant soluble coffee was analyzed and subjected to the sensory evaluation. The results are shown in Table 1.

### Comparative Example 3

A solution treated with an activated carbon was obtained in the same manner as in Example 1, and then dried using a spray dryer to yield a dried coffee extract. 9.9 mg of acetic acid was added to 3.4 g of the dried coffee extract, and the resultant was mixed to yield a soluble coffee. The resultant soluble coffee was analyzed and subjected to the sensory evaluation. The results are shown in Table 1.

### Comparative Example 4

A soluble coffee was obtained in the same manner as in Example 1 except that 9.9 mg of acetic acid was further added to 3.4 g of the dried coffee extract. The resultant soluble coffee was analyzed and subjected to the sensory evaluation. The results are shown in Table 1.

### Comparative Example 5

A soluble coffee was obtained in the same manner as in Example 1 except that the dried coffee extract obtained in the same manner as in Comparative Example 1 was used. The resultant soluble coffee was analyzed and subjected to the sensory evaluation. The results are shown in Table 1.

### Comparative Example 6

The concentrated coffee composition of Example 25 was dried using a spray dryer without the treatment with the activated carbon to yield a dried coffee extract. The resultant dried coffee extract was analyzed and subjected to the sensory evaluation. The results are shown in Table 1.

**[Table 1]**

| | | | Example | | | | | | | | Comparative Example | | | | | |
|---|---|---|---|---|---|---|---|---|---|---|---|---|---|---|---|---|
| | | | 1 | 2 | 3 | 4 | 5 | 23 | 24 | 25 | 1 | 2 | 3 | 4 | 5 | 6 |
| | L value of roasted coffee beans | | 26 | 26 | 26 | 26 | 26 | 26 | 26 | 30 | 26 | 26 | 26 | 26 | 26 | 30 |
| | Usage of activated carbon (with respect to Brix) | mass% | 30 | 30 | 30 | 30 | 30 | 15 | 35 | 20 | 0 | 30 | 30 | 30 | 0 | 0 |
| Dried coffee extract | (A) Malic acid (with respect to Brix) | mass% | 0.50 | 0.55 | 0.60 | 0.70 | 0.80 | 0.43 | 0.52 | 0.54 | 0.37 | 0.50 | 0.50 | 0.50 | 0.37 | 0.3 7 |
| | (B) Acetic acid (with respect to Brix) | mass% | 1.21 | 1.21 | 1.21 | 1.21 | 1.21 | 1.18 | 1.22 | 0.57 | 1.15 | 1.21 | 1.50 | 1.50 | 1.15 | 0.7 3 |
| | Mass ratio [(B)/(A)] | | 2.42 | 2.20 | 2.01 | 1.73 | 1.51 | 2.72 | 2.34 | 1.07 | 3.11 | 2.42 | 3.00 | 3.00 | 3.11 | 1.9 7 |
| | Usage of dried coffee extract | g | 3.4 | 3.4 | 3.4 | 3.4 | 3.4 | 3.4 | 3.4 | 3.4 | 3.4 | 3.4 | 3.4 | 3.4 | 3.4 | 3.4 |
| | Producing region of roasted coffee beans | | Brazil | Brazil | Brazil | Brazil | Brazil | Brazil | Brazil | Brazil | - | - | - | Brazil | Brazil | - |
| Roasted coffee bean fine powder | L value of roasted coffee beans | | 16 | 16 | 16 | 16 | 16 | 16 | 16 | 16 | - | - | - | 16 | 16 | - |
| | Pulverization method for roasted coffee beans | | Pulverization at normal temperature | Pulverization at normal temperature | Pulverization at normal temperature | Pulverization at normal temperature | Pulverization at normal temperature | Pulverization at normal temperature | Pulverization at normal temperature | Pulverization at normal temperature | - | - | - | Pulverization at normal temperature | Pulverization at normal temperature | - |
| | Average particle size | µm | 19 | 19 | 19 | 19 | 19 | 19 | 19 | 19 | - | - | - | 19 | 19 | - |
| | Addition amount of roasted coffee bean fine powder (with respect to dried coffee extract) | mass% | 10 | 10 | 10 | 10 | 10 | 10 | 10 | 10 | 0 | 0 | 0 | 10 | 10 | 0 |
| | (A) Malic acid | mass% | 0.53 | 0.58 | 0.63 | 0.74 | 0.84 | 0.45 | 0.54 | 0.56 | 0.43 | 0.58 | 0.58 | 0.53 | 0.93 | 0.4 3 |
| | (B) Acetic acid | mass% | 1.28 | 1.28 | 1.28 | 1.28 | 1.28 | 1.23 | 1.28 | 0.60 | 1.34 | 1.40 | 1.74 | 1.58 | 1.33 | 0.8 5 |
| | (C) Cellulose | mass% | 0.05 | 0.05 | 0.05 | 0.05 | 0.05 | 0.05 | 0.05 | 0.05 | 0.00 | 0.00 | 0.00 | 0.05 | 0.05 | 0.0 0 |
| | (D) Chlorogenic acids | mass% | 8.2 | 8.2 | 8.2 | 8.2 | 8.2 | 8.3 | 8.1 | 10.3 | 8.9 | 9.0 | 8.9 | 8.2 | 8.2 | 11. 4 |
| | (E) Caffeine | mass% | 2.3 | 2.3 | 2.3 | 2.3 | 2.3 | 4.0 | 1.7 | 2.5 | 6.6 | 2.5 | 2.5 | 2.3 | 6.1 | 6.6 |
| | Mass ratio [(B)/(A) ] | | 2.42 | 2.21 | 2.03 | 1.73 | 1.52 | 2.73 | 2.37 | 1.07 | 3.11 | 2.93 | 3.00 | 2.98 | 3.09 | 1.9 8 |
| | Mass ratio L(A)/(D)] | | 0.065 | 0.071 | 0.077 | 0.090 | 0.102 | 0.054 | 0.067 | 0.054 | 0.048 | 0.064 | 0.065 | 0.077 | 0.098 | 0.0 38 |
| | Mass ratio [(B)/(D) | | 0.156 | 0.156 | 0.156 | 0.156 | 0.156 | 0.199 | 0.158 | 0.058 | 0.150 | 0.156 | 0.196 | 0.193 | 0.199 | 0.0 75 |
| Soluble coffee | Mass ratio [(E)/(D)] | | 0.28 | 0.28 | 0.28 | 0.28 | 0.28 | 0.48 | 0.21 | 0.24 | 0.74 | 0.28 | 0.28 | 0.28 | 0.74 | 0.5 8 |
| | Ratio of particles each having particle size of less than 10 µm | Vol% | 1.1 | 1.1 | 0.9 | 1.0 | 1.1 | 3.5 | 1.0 | 2.0 | 96.0 | n.d. | n.d. | 1.1 | 6.3 | 96. 7 |
| | Ratio of particles each having particle size of 10 µm or more | vol% | 98.9 | 98.9 | 99.1 | 99.0 | 98.9 | 96.5 | 99.0 | 98.0 | 4.0 | n.d. | n.d. | 98.9 | 93.7 | 3.3 |
| | HAZE value | | 63 | 62 | 64 | 62 | 63 | 70 | 62 | 62 | 86 | 7 | 7 | 64 | >95 | 85 |
| | Sensory evaluation | Aroma spreading to nose | 5 | 4 | 4 | 4 | 4 | 4 | 4 | 4 | 3 | 2 | 3 | 4 | 5 | 2 |
| | | Quality of sourness | 4 | 4 | 4 | 4 | 4 | 4 | 4 | 5 | 2 | 4 | 1 | 2 | 2 | 4 |
| | | Clean taste | 5 | 5 | 5 | 5 | 5 | 5 | 5 | 3 | 3 | 5 | 2 | 5 | 3 | 3 |
| | | Residual feeling on tongue | 5 | 5 | 5 | 5 | 5 | 5 | 5 | 4 | 4 | 5 | 4 | 5 | 4 | 2 |

### Example 6

A soluble coffee was prepared in the same manner as in Example 1 except that the addition amount of the roasted coffee bean fine powder was changed to 2 mass% (0.068g). The resultant soluble coffee was analyzed and subjected to the sensory evaluation. The results are shown in Table 2 together with the results of Example 1.

### Example 7

A soluble coffee was prepared in the same manner as in Example 1 except that the addition amount of the roasted coffee bean fine powder was changed to 5 mass% (0. 17 g) . The resultant soluble coffee was analyzed and subjected to the sensory evaluation. The results are shown in Table 2 together with the results of Example 1.

### Example 8

A soluble coffee was prepared in the same manner as in Example 1 except that the addition amount of the roasted coffee bean fine powder was changed to 20 mass% (0.68g). The resultant soluble coffee was analyzed and subjected to the sensory evaluation. The results are shown in Table 2 together with the results of Example 1.

### Example 9

A soluble coffee was prepared in the same manner as in Example 1 except that the addition amount of the roasted coffee bean fine powder was changed to 30 mass% (1.02g). The resultant soluble coffee was analyzed and subjected to the sensory evaluation. The results are shown in Table 2 together with the results of Example 1.

### Example 10

A soluble coffee was prepared in the same manner as in Example 1 except that the addition amount of the roasted coffee bean fine powder was changed to 50 mass% (1.7g) . The resultant soluble coffee was analyzed and subjected to the sensory evaluation. The results are shown in Table 2 together with the results of Example 1.

### Example 26

A soluble coffee was prepared in the same manner as in Example 23 except that the addition amount of the roasted coffee bean fine powder was changed to 2 mass% (0.068 g). The resultant soluble coffee was analyzed and subjected to the sensory evaluation. The results are shown in Table 2 together with the results of Example 23.

### Example 27

A soluble coffee was prepared in the same manner as in Example 23 except that the addition amount of the roasted coffee bean fine powder was changed to 20 mass% (0.68g). The resultant soluble coffee was analyzed and subjected to the sensory evaluation. The results are shown in Table 2 together with the results of Example 23.

**[Table 2]**

| | | | Example | | | | | | | | |
|---|---|---|---|---|---|---|---|---|---|---|---|
| | | | 6 | 7 | 1 | 8 | 9 | 10 | 26 | 23 | 27 |
| | L value of roasted coffee beans | | 26 | 26 | 26 | 26 | 26 | 26 | 26 | 26 | 26 |
| | Usage of activated carbon (with respect to Brix) | mass% | 30 | 30 | 30 | 30 | 30 | 30 | 15 | 15 | 15 |
| Dried coffee extract | (A) Malic acid (with respect to Brix) | mass% | 0.50 | 0.50 | 0.50 | 0.50 | 0.50 | 0.50 | 0.43 | 0.43 | 0.43 |
| | (B) Acetic acid (with respect to Brix) | mass% | 1.21 | 1.21 | 1.21 | 1.21 | 1.21 | 1.21 | 1.18 | 1.18 | 1.18 |
| | Mass ratio [(B)/(A)] | | 2.42 | 2.42 | 2.42 | 2.42 | 2.42 | 2.42 | 2.72 | 2.72 | 2.72 |
| | Usage of dried coffee extract | g | 3.4 | 3.4 | 3.4 | 3.4 | 3.4 | 3.4 | 3.4 | 3.4 | 3.4 |
| | Producing region of roasted coffee beans | | Brazil | Brazil | Brazil | Brazil | Brazil | Brazil | Brazil | Brazil | Brazil |
| | L value of roasted coffee beans | | 16 | 16 | 16 | 16 | 16 | 16 | 16 | 16 | 16 |
| Roasted coffee bean fine powder | Pulverization method for roasted coffee beans | | Pulverization at normal temperature | Pulverization at normal temperature | Pulverization at normal temperature | Pulverization at normal temperature | Pulverization at normal temperature | Pulverization at normal temperature | Pulverization at normal temperature | Pulverization at normal temperature | Pulverization at normal temperature |
| | Average particle size | µm | 19 | 19 | 19 | 19 | 19 | 19 | 19 | 19 | 19 |
| | Addition amount of roasted coffee bean fine powder (with respect to dried coffee extract) | mass% | 2 | 5 | 10 | 20 | 30 | 50 | 2 | 10 | 20 |
| | (A) Malic acid | mass% | 0.57 | 0.55 | 0.53 | 0.48 | 0.45 | 0.39 | 0.50 | 0.95 | 0.92 |
| | (B) Acetic acid | mass% | 1.38 | 1.34 | 1.28 | 1.18 | 1.09 | 0.99 | 1.35 | 1.23 | 1.15 |
| | (C) Cellulose | mass% | 0.01 | 0.03 | 0.05 | 0.11 | 0.16 | 0.27 | 0.01 | 0.05 | 0.11 |
| | (D) Chlorogenic acids | mass% | 8.8 | 8.6 | 8.2 | 7.5 | 6.9 | 5.0 | 8.8 | 8.3 | 7.5 |
| | (E) Caffeine | mass% | 2.4 | 2.4 | 2.3 | 2.2 | 2.2 | 2.0 | 4.7 | 4.0 | 3.6 |
| | Mass ratio [(B)/(A)] | | 2.42 | 2.44 | 2.42 | 2.46 | 2.42 | 2.41 | 2.70 | 2.73 | 2.70 |
| | Mass ratio [(A)/(D)] | | 0.065 | 0.064 | 0.065 | 0.064 | 0.065 | 0.065 | 0.057 | 0.054 | 0.056 |
| Soluble coffee | Mass ratio [(B)/(D)] | | 0.157 | 0.156 | 0.156 | 0.157 | 0.158 | 0.188 | 0.154 | 0.199 | 0.153 |
| | Mass ratio [(E)/(D)] | | 0.27 | 0.28 | 0.28 | 0.29 | 0.32 | 0.33 | 0.53 | 0.48 | 0.48 |
| | Ratio of particles each having particle size of less than 10 µm | vol% | 1.4 | 1.2 | 1.1 | 0.9 | 0.5 | 0.2 | 1.4 | 3.5 | 0.9 |
| | Ratio of particles each having particle size of 10 µm or more | vol% | 98.6 | 98.8 | 98.9 | 99.1 | 99.5 | 99.8 | 98.6 | 96.5 | 99.1 |
| | HAZE value | | 36 | 58 | 63 | 72 | 83 | >100 | 36 | 70 | 72 |
| | Sensory evaluation | Aroma spreading to nose | 4 | 5 | 5 | 5 | 5 | 5 | 4 | 5 | 5 |
| | Quality of sourness | 4 | 4 | 4 | 4 | 4 | 4 | 4 | 4 | 4 | |
| | Clean taste | 5 | 5 | 5 | 5 | 4 | 2 | 5 | 5 | 5 | |
| | Residual feeling on tongue | 5 | 5 | 5 | 5 | 4 | 2 | 5 | 5 | 5 | |

### Example 11

A soluble coffee was prepared in the same manner as in Example 1 except that a roasted coffee bean fine powder obtained by classifying the pulverized product using sieves (Tyler 20, 60, 115, 170, and 400 mesh) and collecting a roasted coffee bean fine powder having passed through the 170 mesh sieve and having remained on the 400 mesh sieve to adjust the average particle size to 65 µm was added. The resultant soluble coffee was analyzed and subj ected to the sensory evaluation. The results are shown in Table 3 together with the results of Example 1.

### Example 12

A soluble coffee was obtained in the same manner as in Example 1 except that a roasted coffee bean fine powder obtained by classifying the pulverized product using sieves (Tyler 20, 60, 115, and 170 mesh) and collecting a roasted coffee bean fine powder having passed through the 115 mesh sieve and having remained on the 170 mesh sieve to adjust the average particle size to 107 µm was added. The resultant soluble coffee was analyzed and subjected to the sensory evaluation. The results are shown in Table 3 together with the results of Example 1.

### Example 13

A soluble coffee was obtained in the same manner as in Example 1 except that a roasted coffee bean fine powder obtained by classifying the pulverized product using sieves (Tyler 20, 60, and 115 mesh) and collecting a roasted coffee bean fine powder having passed through the 60 mesh sieve and having remained on the 115 mesh sieve to adjust the average particle size to 202 µm was added. The resultant soluble coffee was analyzed and subjected to the sensory evaluation. The results are shown in Table 3 together with the results of Example 1.

### Example 14

A soluble coffee was obtained in the same manner as in Example 1 except that a roasted coffee bean fine powder obtained by classifying the pulverized product using sieves (Tyler 20 and 60 mesh) and collecting a roasted coffee bean fine powder having passed through the 20 mesh sieve and having remained on the 60 mesh sieve to adjust the average particle size to 550 µm was added. The resultant soluble coffee was analyzed and subjected to the sensory evaluation. The results are shown in Table 3 together with the results of Example 1.

**[Table 3]**

| | | | Example | | | | |
|---|---|---|---|---|---|---|---|
| | | | 1 | 11 | 12 | 13 | 14 |
| | L value of roasted coffee beans | | 26 | 26 | 26 | 26 | 26 |
| | Usage of activated carbon (with respect to Brix) | mass% | 30 | 30 | 30 | 30 | 30 |
| Dried coffee extract | (A) Malic acid (with respect to Brix) | mass% | 0.50 | 0.50 | 0.50 | 0.50 | 0.50 |
| | (B) Acetic acid (with respect to Brix) | mass% | 1.21 | 1.21 | 1.21 | 1.21 | 1.21 |
| | Mass ratio [(B)/(A)] | | 2.42 | 2.42 | 2.42 | 2.42 | 2.42 |
| | Usage of dried coffee extract | g | 3.4 | 3.4 | 3.4 | 3.4 | 3.4 |
| | Producing region of roasted coffee beans | | Brazil | Brazil | Brazil | Brazil | Brazil |
| Roasted coffee bean fine powder | L value of roasted coffee beans | | 16 | 16 | 16 | 16 | 16 |
| | Pulverization method for roasted coffee beans | | Pulverization at normal temperature | Pulverization at normal temperature | Pulverization at normal temperature | Pulverization at normal temperature | Pulverization at normal temperature |
| | Average particle size | µm | 19 | 65 | 107 | 202 | 550 |
| | Addition amount of roasted coffee bean fine powder (with respect to dried coffee extract) | mass% | 10 | 10 | 10 | 10 | 10 |
| | (A) Malic acid | mass% | 0.53 | 0.53 | 0.53 | 0.53 | 0.53 |
| | (B) Acetic acid | mass% | 1.28 | 1.28 | 1.28 | 1.28 | 1.28 |
| | (C) Cellulose | mass% | 0.05 | 0.05 | 0.05 | 0.05 | 0.05 |
| | (D) Chlorogenic acids | mass% | 8.2 | 8.2 | 8.2 | 8.2 | 8.2 |
| | (E) Caffeine | mass% | 2.3 | 2.3 | 2.3 | 2.3 | 2.3 |
| | Mass ratio [(B)/(A)] | | 2.42 | 2.42 | 2.42 | 2.42 | 2.42 |
| | Mass ratio [(A) / (D)] | | 0.065 | 0.065 | 0.065 | 0.065 | 0.065 |
| | Mass ratio [(B) / (D)] | | 0.156 | 0.156 | 0.156 | 0.156 | 0.156 |
| | Mass ratio [(E) / (D)] | | 0.28 | 0.28 | 0.28 | 0.28 | 0.28 |
| Soluble coffee | Ratio of particles each having particle size of less than 10 µm | vol% | 1.1 | 1.0 | 1.1 | 1.2 | 1.4 |
| | Ratio of particles each having particle size of 10 µm or more | vol% | 98.9 | 99.0 | 98.9 | 98.8 | 98.6 |
| | HAZE value | | 63 | 67 | 70 | 76 | 88 |
| | Sensory evaluation | Aroma spreading to nose | 5 | 5 | 4 | 4 | 4 |
| | | Quality of sourness | 4 | 4 | 4 | 4 | 4 |
| | | Clean taste | 5 | 5 | 4 | 4 | 2 |
| | | Residual feeling on tongue | 5 | 5 | 4 | 4 | 2 |

### Example 15

A soluble coffee was obtained in the same manner as in Example 1 except that a roasted coffee bean fine powder having an average particle size of 19 µm, obtained by freezing roasted coffee beans having an L value of 16 *(Coffea arabica,* produced in Brazil) with liquid nitrogen, pulverizing the resultant, and collecting particles having passed through the 400 mesh sieve, was added. The resultant soluble coffee was analyzed and subjected to the sensory evaluation. The results are shown in Table 4 together with the results of Example 1.

### Example 16

A soluble coffee was obtained in the same manner as in Example 1 except that a roasted coffee bean fine powder having an average particle size of 19 µm, obtained by freezing roasted coffee beans having an L value of 19 *(Coffea arabica,* produced in Brazil) with liquid nitrogen, pulverizing the resultant, and collecting particles having passed through the 400 mesh sieve, was added. The resultant soluble coffee was analyzed and subjected to the sensory evaluation. The results are shown in Table 4 together with the results of Example 1.

### Example 17

A soluble coffee was obtained in the same manner as in Example 1 except that a roasted coffee bean fine powder having an average particle size of 19 µm, obtained by freezing roasted coffee beans having an L value of 26 *(Coffea arabica,* produced in Brazil) with liquid nitrogen, pulverizing the resultant, and collecting particles having passed through the 400 mesh sieve, was added. The resultant soluble coffee was analyzed and subjected to the sensory evaluation. The results are shown in Table 4 together with the results of Example 1.

**[Table 4]**

| | | | Example | | | |
|---|---|---|---|---|---|---|
| | | | 1 | 15 | 16 | 17 |
| | L value of roasted coffee beans | | 26 | 26 | 26 | 26 |
| | Usage of activated carbon (with respect to Brix) | mass% | 30 | 30 | 30 | 30 |
| Dried coffee extract | (A) Malic acid (with respect to Brix) | mass% | 0.50 | 0.50 | 0.50 | 0.50 |
| | (B) Acetic acid (with respect to Brix) | mass% | 1.21 | 1.21 | 1.21 | 1.21 |
| | Mass ratio [(B)/(A)] | | 2.42 | 2.42 | 2.42 | 2.42 |
| | Usage of dried coffee extract | g | 3.4 | 3.4 | 3.4 | 3.4 |
| | Producing region of roasted coffee beans | | Brazil | Brazil | Brazil | Brazil |
| Roasted coffee bean fine powder | L value of roasted coffee beans | | 16 | 16 | 19 | 26 |
| | Pulverization method for roasted coffee beans | | Pulverization at normal temperature | freeze pulverization | freeze pulverization | freeze pulverization |
| | Average particle size | µm | 19 | 19 | 19 | 19 |
| | Addition amount of roasted coffee bean fine powder (with respect to dried coffee extract) | mass% | 10 | 10 | 10 | 10 |
| | (A) Malic acid | mass% | 0.53 | 0.53 | 0.53 | 0.53 |
| | (B) Acetic acid | mass% | 1.28 | 1.28 | 1.29 | 1.29 |
| | (C) Cellulose | mass% | 0.05 | 0.05 | 0.05 | 0.05 |
| | (D) Chlorogenic acids | mass% | 8.2 | 8.2 | 8.2 | 8.2 |
| | (E) Caffeine | mass% | 2.3 | 2.3 | 2.3 | 2.3 |
| | Mass ratio [(B)/(A)] | | 2.42 | 2.42 | 2.43 | 2.43 |
| | Mass ratio [(A)/(D)] | | 0.065 | 0.065 | 0.065 | 0.065 |
| | Mass ratio [(B) / (D)] | | 0.156 | 0.156 | 0.157 | 0.157 |
| | Mass ratio [(E)/(D)] | | 0.28 | 0.28 | 0.28 | 0.28 |
| Soluble coffee | Ratio of particles each having particle size of less than 10 µm | vol% | 1.1 | 1.0 | 1.1 | 0.9 |
| | Ratio of particles each having particle size of 10 µm or more | vol% | 98.9 | 99.0 | 98.9 | 99.1 |
| | HAZE value | | 63 | 63 | 64 | 62 |
| | Sensory evaluation | Aroma spreading to nose | 5 | 5 | 5 | 4 |
| | | Quality of sourness | 4 | 4 | 4 | 4 |
| | | Clean taste | 5 | 5 | 5 | 5 |
| | | Residual feeling on tongue | 5 | 5 | 5 | 5 |

### Example 18

A soluble coffee was obtained in the same manner as in Example 1 except that a roasted coffee bean fine powder obtained using roasted coffee beans having an L value of 16 *(Coffea arabica,* produced in Columbia) and having an average particle size of 19 µm was added. The resultant soluble coffee was analyzed and subj ected to the sensory evaluation. The results are shown in Table 5 together with the results of Example 1.

### Example 19

A soluble coffee was obtained in the same manner as in Example 1 except that a roasted coffee bean fine powder obtained using roasted coffee beans having an L value of 16 (*Coffea robsuta,* produced in Indonesia) and having an average particle size of 19 µm was added. The resultant soluble coffee was analyzed and subjected to the sensory evaluation. The results are shown in Table 5 together with the results of Example 1.

**[Table 5]**

| | | | Example | | |
|---|---|---|---|---|---|
| | | | 1 | 18 | 19 |
| | L value of roasted coffee beans | | 26 | 26 | 26 |
| | Usage of activated carbon (with respect to Brix) | mass% | 30 | 30 | 30 |
| Dried coffee extract | (A) Malic acid (with respect to Brix) | mass% | 0.50 | 0.50 | 0.50 |
| | (B) Acetic acid (with respect to Brix) | mass% | 1.21 | 1.21 | 1.21 |
| | Mass ratio [(B)/(A)] | | 2.42 | 2.42 | 2.42 |
| | Usage of dried coffee extract | g | 3.4 | 3.4 | 3.4 |
| | Producing region of roasted coffee beans | | Brazil | Colombia | Indonesia |
| | Lvalue of roasted coffee beans | | 16 | 16 | 16 |
| Roasted coffee bean fine powder | Pulverization method for roasted coffee beans | | Pulverization at normal temperature | Pulverization at normal temperature | Pulverization at normal temperature |
| | Average particle size | µm | 19 | 19 | 19 |
| | Addition amount of roasted coffee bean fine powder (with respect to dried coffee extract) | mass% | 10 | 10 | 10 |
| | (A) Malic acid | mass% | 0.53 | 0.53 | 0.53 |
| | (B) Acetic acid | mass% | 1.28 | 1.28 | 1.28 |
| | (C) Cellulose | mass% | 0.05 | 0.05 | 0.05 |
| | (D) Chlorogenic acids | mass% | 8.2 | 8.2 | 8.2 |
| | (E) Caffeine | mass% | 2.3 | 2.3 | 2.4 |
| | Mass ratio [(B)/(A)] | | 2.42 | 2.42 | 2.42 |
| | Mass ratio [(A)/(D)] | | 0.065 | 0.065 | 0.065 |
| | Mass ratio [(B)/(D)] | | 0.156 | 0.156 | 0.156 |
| | Mass ratio [(E) / (D)] | | 0.28 | 0.28 | 0.29 |
| Soluble coffee | Ratio of particles each having particle size of less than 10 µm | vol% | 1.1 | 1.1 | 1.0 |
| | Ratio of particles each having particle size of 10 µm or more | vol% | 98.9 | 98.9 | 99.0 |
| | HAZE value | | 63 | 63 | 63 |
| | Sensory evaluation | Aroma spreading to nose | 5 | 5 | 4 |
| | | Quality of sourness | 4 | 4 | 4 |
| | | Clean taste | 5 | 5 | 5 |
| | | Residual feeling on tongue | 5 | 5 | 5 |

### Example 20

A soluble coffee was obtained in the same manner as in Example 1 except that a dried coffee extract obtained by drying the solution treated with an activated carbon using a freeze dryer was used. The resultant soluble coffee was analyzed and subjected to the sensory evaluation. The results are shown in Table 6 together with the results of Example 1.

### Example 21

A solution treated with an activated carbon and a roasted coffee bean fine powder having an average particle size of 19 µm were prepared in the same manner as in Example 1, and 10 mass% (0.34 g) of the roasted coffee bean fine powder was added with respect to 3.4 g of solids of the solution treated with an activated carbon. The resultant was mixed and dried using a spray dryer to yield 3.74 g of a soluble coffee. The resultant soluble coffee was analyzed and subjected to the sensory evaluation. The results are shown in Table 6 together with the results of Example 1.

### Example 22

A drip extractor (inner diameter: 73 mm, volume: 11 L) was filled with 100 g of activated carbon (KURARAY COAL GW), and then the activated carbon was sterilized with hot water at 85°C for 10 minutes, followed by loading of 400 g of pulverized roasted coffee beans having an L value of 26 (*Coffea robusta,* produced in Vietnam) on the activated carbon. Subsequently, the bottom of the extractor was filled with 0.250 L of hot water, and 1.02 L of hot water at 85°C was fed through a shower from above the roasted coffee beans. The state was maintained for 10 minutes. After maintaining the state, hot water at 85°C was fed through a shower and discharged (flow rate: 12.5 g/10 sec). The collection of the solution was stopped when the amount of the collected solution reached 2.4 L, and the resultant collected solution was used as an extract solution. The resultant extract was dried using a spray dryer to yield a dried coffee extract.

Further, roasted coffee beans having an L value of 16 (*Coffea arabica,* produced in Brazil) were pulverized at normal temperature using a Wonder Blender (model: WB-I, manufactured by Osaka Chemical Co. , Ltd.), and the pulverized product was classified using sieves (Tyler 20, 60, 115, 170, and 400 mesh), followed by collection of particles having passed through the 400 mesh sieve to yield a roasted coffee bean fine powder having an average particle size adjusted to 19 µm.

10 mass% (0.34 g) of the roasted coffee bean fine powder was added with respect to 3.4 g of the dried coffee extract, and the resultant was mixed to yield a soluble coffee. The resultant soluble coffee was analyzed and subjected to the sensory evaluation. The results are shown in Table 6 together with the results of Example 1.

**[Table 6]**

| | | | Example | | | |
|---|---|---|---|---|---|---|
| | | | 1 | 20 | 21 | 22 |
| | L value of roasted coffee beans | | 26 | 26 | 26 | 26 |
| | Extraction temperature °C | | 150 | 150 | 150 | 85 |
| | Kind of activated carbon | | WH2c-LSS | WH2c-LSS | WH2c-LSS | GW32/60 |
| | Usage of activated carbon (with respect to Brix) | mass% | 30 | 30 | 30 | 25 |
| Driedcoffee extract | Extraction method | | Multi-step | Multi-step | Multi-step | Single-tube |
| | Method for treatment with activated carbon | | Column | Column | Column | Simultaneous |
| | (A) Malic acid (with respect to Brix) | mass% | 0.50 | 0.50 | 0.50 | 0.70 |
| | (B) Acetic acid (with respect to Brix) | mass% | 1.21 | 1.21 | 1.21 | 1.40 |
| | Mass ratio [(B)/(A)] | | 2.42 | 2.42 | 2.42 | 2.00 |
| | Usage of dried coffee extract | g | 3.4 | 3.4 | 3.4 | 3.4 |
| | Producing region of roasted coffee beans | | Brazil | Brazil | Brazil | Brazil |
| | L value of roasted coffee beans | | 16 | 16 | 16 | 16 |
| Roasted coffee bean fine powder | Pulverization method for roasted coffee beans | | Pulverization at normal temperature | Pulverization at normal temperature | Pulverization at normal temperature | Pulverization at normal temperature |
| | Average particle size | µm | 19 | 19 | 19 | 19 |
| | Addition amount of roasted coffee bean fine powder (with respect to dried coffee extract) | mass% | 10 | 10 | 10 | 10 |
| Method of producing soluble coffee | | | *1 | *2 | *3 | *1 |
| | (A) Malic acid | mass% | 0.53 | 0.53 | 0.53 | 0.74 |
| | (B) Acetic acid | mass% | 1.28 | 1.28 | 1.28 | 1.48 |
| | (C) Cellulose | mass% | 0.05 | 0.05 | 0.05 | 0.05 |
| | (D) Chlorogenic acids | mass% | 8.2 | 8.2 | 8.2 | 12.2 |
| | (E) Caffeine | mass% | 2.3 | 2.3 | 2.3 | 1.6 |
| | Mass ratio [(B)/(A)] | | 2.42 | 2.42 | 2.42 | 2.00 |
| | Mass ratio [(A)/(D)] | | 0.065 | 0.065 | 0.065 | 0.061 |
| | Mass ratio [(B)/(D)] | | 0.156 | 0.156 | 0.156 | 0.121 |
| | Mass ratio [(E)/(D)] | | 0.28 | 0.28 | 0.28 | 0.13 |
| Soluble coffee | Ratio of particles each having particle size of less than 10 µm | vol% | 1.1 | 1.0 | 1.0 | 1.0 |
| | Ratio of particles each having particle size of 10 µm or more | vol% | 98.9 | 99.0 | 99.0 | 99.0 |
| | HAZE value | | 63 | 64 | 64 | 63 |
| | Sensory evaluation | Aroma spreading to nose | 5 | 5 | 4 | 4 |
| | | Quality of sourness | 4 | 4 | 4 | 4 |
| | | Clean taste | 5 | 5 | 5 | 5 |
| | | Residual feeling on tongue | 5 | 5 | 5 | 5 |

| | | | | | | |
|---|---|---|---|---|---|---|
| *1: The dried coffee extract obtained by drying through spray drying and the roasted coffee bean fine powder were mixed. *2: The dried coffee extract obtained by freeze drying and the roasted coffee bean fine powder were mixed. *3: The roasted coffee bean fine powder was mixed with the coffee extract, and the mixture was dried through spray drying. | | | | | | |

As is apparent from Table 1, when the mass ratio [(B) / (A)] in the soluble coffee containing the dried coffee extract and the roasted coffee bean fine powder is controlled so as to fall within a predetermined range, it found that the soluble coffee has good quality of sourness and a good aroma spreading to the nose. In addition, as is apparent from Tables 2 and 3, when the content of the cellulose (C), the ratio of the particles each having a particle size of 10 µm or more, as determined under predetermined conditions, and the average particle size of the roasted coffee bean fine powder are controlled so as to fall within specific ranges, it found that the soluble coffee has an enhanced clean taste, a reduced residual feeling on the tongue, and improved transparency.

## Claims

1. A soluble coffee, comprising:
a dried coffee extract; and
a roasted coffee bean fine powder,
wherein the soluble coffee has a mass ratio of acetic acid (B) to malic acid (A), [(B)/(A)], of 2.9 or less.

2. The soluble coffee according to claim 1, wherein the soluble coffee has a ratio of particles each having a particle size of 10 µm or more of 95 vol% or more in a particle size distribution on a volume basis measured for a diluted solution obtained by diluting 2 g of the soluble coffee with 180 mL of pure water at 85°C with a laser diffraction particle size analyzer.

3. The soluble coffee according to claim 1 or 2, further comprising 0.001 mass% or more of cellulose (C).

4. The soluble coffee according to any one of claims 1 to 3, wherein the roasted coffee bean fine powder has an average particle size of 550 µm or less.

5. The soluble coffee according to any one of claims 1 to 4, wherein the roasted coffee bean fine powder has a degree of roasting of from L10 to L40.

6. The soluble coffee according to any one of claims 1 to 5, wherein the soluble coffee has a content of chlorogenic acid (D) of from 5 to 20 mass%.

7. The soluble coffee according to any one of claims 1 to 6, wherein a ratio of the roasted coffee bean fine powder to the dried coffee extract is from 0.5 to 150 mass%.

8. The soluble coffee according to any one of claims 1 to 7, wherein the soluble coffee has a HAZE value of a water-diluted solution, obtained by diluting 3.4 g of the soluble coffee with 180 mL of pure water at 85°C, of 85 or less.

9. The soluble coffee according to any one of claims 1 to 8, further comprising 5 mass% or less of caffeine (E).

10. The soluble coffee according to any one of claims 1 to 9, further comprising caffeine (E), wherein the soluble coffee has a mass ratio of the caffeine (E) to the chlorogenic acid (D), [(E) / (D)], of 0.48 or less.

11. A method of improving sourness of a soluble coffee, the method comprising blending a dried coffee extract and a roasted coffee bean fine powder so that a mass ratio of acetic acid (B) to malic acid (A), [(B)/(A)], is adjusted to 2.9 or less.

12. The method of improving sourness of a soluble coffee according to claim 11, the method further comprising adjusting a ratio of particles each having a particle size of 10 µm or more to 95 vol% or more in a particle size distribution on a volume basis measured for a diluted solution obtained by diluting 2 g of a soluble coffee with 180 mL of pure water at 85°C by a laser diffraction particle size analyzer.

13. The method of improving sourness of a soluble coffee according to claim 11 or 12, the method further comprising adjusting a content of cellulose (C) to 0.001 mass% or more.
